# NEUE EUROPÄISCHE PATENTSCHRIFT

(11) **EP 0 298 484 B2**
(45) Veröffentlichungstag und Bekanntmachung des Hinweises auf die Entscheidung über den Einspruch: **12.07.1995**
(45) Hinweis auf die Patenterteilung: 19.02.1992
(21) Anmeldenummer: 88110884.9
(22) Anmeldetag: 07.07.1988
(51) Int. Cl.: H04B 10/00, H04L 27/14

(54) **Optischer FSK-Homodynempfänger**
Optical FSK homodyne receiver
Récepteur optique synchrone pour signaux FSK

(30) Priorität: 10.07.1987 DE 3722937
(43) Veröffentlichungstag der Anmeldung: 11.01.1989
(73) Patentinhaber: SIEMENS AKTIENGESELLSCHAFT, 80333 München (DE)
(72) Erfinder: Schneider, Robert, Dipl.-Ing., D-8029 Sauerlach (DE)

(56) Entgegenhaltungen:
- GB-A- 2 000 662
- GB-A- 2 180 419
- US-A- 3 778 727
- PROCEEDINGS OF THE SOCIETY OF PHOTO-OPTICAL INSTRUMENTATION ENGINEERS, (SPIE), Band 630, 1986, Seiten 28-32, Washington, D.C., US; M.J. PETTITT et al.: "Coherent transmission experiments using a wideband homodyne phase diversity receiver"
- 36th IEEE VEHICULAR TECHNOLOGY CONFERENCE, 20.-22. Mai 1986, Dallas, Texas, Seiten 132-139, IEEE, New York, US; S. ARIYAVISITAKUL et al.: "Fractional-bit differential detection of MSK - A new scheme for performance improvement in land mobile radio"
- ELECTRONICS LETTERS, Band 22, Nr. 21, 9. Oktober 1986, Seien 1096-1097, Stevenage, Herts, GB; K. EMURA et al.: "Over 300km transmission experiment on an optical FSK heterodyne dual filter detection system"
- IEEE TRANSACTIONS ON ELECTRON DEVICES, Band ED-32, Nr. 12, Dezember 1985, Seiten 2630-2639, IEEE, New York, US; L.G. KAZOVSKY: "Decision-driven phase-locked loop for optical homodyne receivers: performance analysis and laser linewidth requirements"
- IEEE Journal of Lightwave Technology, Vol. LT-5, No. 4, April 1987, Seiten 561-572; A.W. Davis et al.
- Electronic and Radio Engineering, by F.E. Terman et al., McGraw-Hill Book Company Inc., 1955, Seiten 953-954

## Beschreibung

Die Erfindung betrifft einen optischen Homodyn-Empfänger entsprechend dem Oberbegriff des Anspruchs 1.

In der kohärenten optischen Nachrichtenübertragung ist die Anwendung der Frequenzsprungmodulation (FSK) sehr erwünscht, da einerseits der Sendelaser in bekannter Weise direkt moduliert werden kann, andererseits die Anforderungen an die Linienbreiten der verwendeten Laserdioden nicht so hoch sind wie bei anderen Verfahren. Weiterhin ist in der kohärenten optischen Nachrichtenübertragung der Empfang nach dem Homodyn-Prinzip sehr erwünscht, bei dem Sendelaser und lokaler Laser auf der Empfangsseite die gleiche Frequenz haben. Dabei werden nämlich Verstärker benötigt, die im Vergleich zu Heterodyn-Empfang nur die halbe Bandbreite bei gleicher Bitrate und Modulation aufweisen.

Für den Empfang frequenzsprungmodulierter Lichtsignale wurde bisher ausschließlich von diesem Superheterodynprinzip Gebrauch gemacht. Die Ursache dafür ist, daß bei binärer Frequenzsprungmodulation sendeseitig nur die beiden diskreten Frequenzen f_{T} + f_{H} und f_{T} - f_{H} erzeugt werden, wobei f_{T} die Trägerfrequenz und f_{H} der halbe sendeseitig verwendete Frequenzhub ist. Nach der empfangsseitigen Überlagerung dieser beiden diskreten Frequenzen mit der Trägerfrequenz f_{T} ergibt sich in beiden Fällen eine Frequenz entsprechend dem halben Frequenzhub f_{H}, so daß empfangsseitig keine Unterscheidung zwischen den beiden sendeseitig erzeugten diskreten Frequenzen möglich ist.

Aus dem IEEE-Journal of Lightwave Technology, vol. LT-5, no. 4, April 1987, Seiten 561 bis 572; A.W. DAVIS et al.ist ein optischer Homodynempfänger mit einem eingangsseitigen 90°-Hybrid, dessen beide Ausgänge jeweils über Tiefpaßfilter und Verstärker mit den beiden Eingängen eines Multiplizierers verbunden sind, bekannt. Der Ausgang des Multiplizierers ist dabei über einen Schleifenfilter mit dem Steuereingang eines lokalen Lasers verbunden, wobei der Ausgangsanschluß des lokalen Lasers mit dem einen und ein Signaleingang mit dem anderen Eingangsanschluß des 90°-Hybrids verbunden ist.

Aus der GB-A-2 180 419 ist ein elektrischer Homodynempfänger bekannt, bei dem für den Empfang frequenzsprungmodulierter Signale in die Verbindung zwischen einem Ausgangsanschluß eines 90°-Hybrids und einem Multiplizierer ein Verzögerungsglied eingefügt ist und der Ausgang des Multiplizierers über einen dritten Tiefpaßfilter mit dem Signalausgang des elektrischen Homodynempfängers verbunden ist.

Die Aufgabe bei der vorliegenden Erfindung besteht nun darin, einen optischen Homodyn-Empfänger der eingangs erwähnten Art so weiterzubilden, daß dieser für den Empfang frequenzsprungmodulierter Signale mit insbesondere zur Datenrate großem Frequenzhub geeignet ist.

Erfindungsgemäß wird die Aufgabe dadurch gelöst, daß der eingangs erwähnte optische Homodyn-Empfänger durch die Maßnahmen entsprechend dem Kennzeichen des Patentanspruchs 1 weirtergebildet ist.

Von besonderem Vorteil bei der erfindungsgemäßen Lösung ist der verblüffend geringe zusätzliche Aufwand für den Empfang frequenzsprungmodulierter Signale in optischen Homodynempfängern, die für den Empfang von phasensprungmodulierten Signalen vorgesehen sind. Damit ist auch in einfacher Weise der Aufbau eines optischen Homodynempfängers möglich, der ein abschaltbares Verzögerungsglied enthält und dadurch sowohl für den Empfang frequenzsprungmodulierter als auch phasensprungmodulierter Signale geeignet ist. Zweckmäßige Ausbildungen des erfindungsgemäßen optischen Homodynempfängers sind in den Patentansprüchen 2 bis 4 beschrieben.

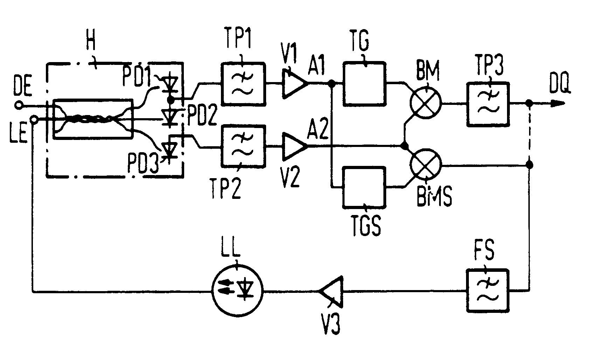

Die Erfindung soll im Folgenden anhand eines in der Zeichnung dargestellten Ausführungsbeispiels näher erläutert werden.

In der Zeichnung zeigt die Figur einen optischen Homodynempfänger für frequenzsprungmodulierte Signale mit einem optischen Eingang DE für das Übertragungssignal, der mit einem Eingang eines optisch-elektronischen 90°-Hybrids H verbunden ist. Bei diesem 90°-Hybrid handelt es sich um einen handelsüblichen Dreifach-Faserkoppler mit drei symmetrischen Eingängen und drei symmetrischen Ausgängen.

Der zweite Eingang LE des 90°-Hybrids ist mit dem optischen Ausgang eines lokalen Lasers LL verbunden, dessen abgegebenes Licht die gleiche Frequenz f_{T} wie die des Übertragungslichts aufweist. An die drei symmetrischen Ausgänge des Dreifach-Faserkopplers sind optisch drei Photodioden PD1, PD2, PD3 angekoppelt, es handelt sich dabei um handelsübliche PIN-Photodioden. Durch den symmetrischen Faserkoppler ergibt sich eine gleichmäßige Leistungsaufteilung der miteinander kombinierten Lichtsignale mit jeweils etwa 33% Koppelgrad, bei wenigstens annähernd verlustfreiem Koppler sind aufgrund der Laufzeitverhältnisse die von den drei Photodioden PD1, PD2, PD3 erzeugten Photoströme jeweils um 120° zueinander phasenverschoben. Die erste und die zweite Photodiode PD1, PD2 sind dabei elektrisch in Gegentakt geschaltet, so daß am Mittelabgriff beider Photodioden ein Differenzstrom entnehmbar ist. An diesen Mittelabgriff ist der erste Zweig A1 des optischen Homodynempfängers und an die dritte Photodiode ist der zweite Zweig A2 angeschlossen. Jeder der beiden Zweige enthält eingangsseitig zur Beseitigung von Frequenzen außerhalb des Signal-Frequenzbandes ein Tiefpaßfilter TP1, TP2, denen jeweils ein erster bzw. zweiter Verstärker V1, V2 nachgeschaltet sind. Dem Ausgang des ersten Verstärkers V1, der in der Verbindung zwischen dem ersten Ausgangsanschluß des 90°-Hybrids und einem Multiplizierer BM enthalten ist, ist ein erstes Verzögerungsglied TG nachgeschaltet. Der Ausgang des zweiten Verstärkers V2 ist direkt mit einem zweiten Eingang des Multiplizierers BM verbunden, bei dem es sich um einen handelsüblichen Balancemischer handelt. Der Ausgang des Multiplizierers BM ist über ein drittes Tiefpaßfilter zur Beseitigung der bei der Multiplikation entstehenden Summenfrequenzen mit dem Signalausgang DQ des optischen Homodyn-Empfängers sowie - gestrichelt dargestellt - mit einem Schleifenfilter FS verbunden. Durch das Schleifenfilter FS wird ein tieffrequenter Anteil des Ausgangssignals nach Verstärkung in einem dritten Verstärker V3 auf den Steuereingang des lokalen Lasers LL gegeben und bewirkt dessen Frequenznachregelung.

Die Wirkungsweise des erfindungsgemäßen optischen Homodyn-Empfängers beruht auf der Erkenntnis, daß durch Verzögerung des Signals im ersten Zweig A1 um eine bestimmte Zeit T und anschließender Multiplikation mit dem Signal des zweiten Zweiges A2 neben der Hubfrequenz 2f_{H} je nach Modulationszustand einer der beiden Pegel ± Umax_{Q} x sin (2πf_{H} x T) auftreten. Bei diesen Pegeln handelt es sich aber bereits um das demodulierte Signal.

Die größte Amplitude erhält man für Tmax = 1/(4 f_{H}). Dabei ist jedoch zu beachten, daß die Verzögerung T so klein gewählt wird, daß die Amplitude des vorangehenden Bits des durchlaufenden Signals zum Abtastzeitpunkt des folgenden Bits vernachlässigbar klein ist und damit keine Auswirkungen hat. Dies ist für T = Tₘₐₓ gewährleistet, sofern der Frequenzhub 2f_{H} mindestens gleich der Bitrate der digitalen Signale ist, und die Abtastung in der Bitmitte erfolgt.

Die LO-Regelung stützt sich darauf, daß der mittlere Ausgangspegel sowohl ein Maß für die Schwerpunktfrequenz des Basisbandsignals, die Null sein soll, darstellt, als auch deren Vorzeichen liefert. Dazu ist erforderlich, daß das Datensignal keine Frequenzen unterhalb der Grenzfrequenz der Regelschleife enthält. Die LO-Regelung kann aber nur dann funktionieren, wenn die Verzögerungszeit T deutlich kleiner Tₘₐₓ ist, da für T = Tₘₐₓ der mittlere Ausgangspegel immer gleich Null ist. Letzterer Fall erfordert einen zweiten Mischer BMS und ein zweites Verzögerungsglied TGS mit TGs << TG für die LO-Regelung.

Der zweite Mischer BMS kann dabei ebenfalls ein Balancemischer sein, das zweite Verzögerungsglied TGS ist so bemessen, daß seine Verzögerungszeit maximal der halben Verzögerungszeit des ersten Verzögerungsgliedes TG entspricht. Das zweite Verzögerungsglied TGS ist dabei eingangsseitig dem ersten Verzögerungsglied TG parallelgeschaltet, der Ausgang des zweiten Verzögerungsgliedes TGS ist mit dem einen Eingang des zweiten Mischers BMS verbunden. Der andere Eingang des zweiten Mischers BMS ist mit demjenigen Eingang des ersten Mischers BM verbunden, der nicht an das erste Verzögerungsglied TG angeschlossen ist. Die - gestrichelte - Verbindung vom Ausgang des dritten Tiefpaßfilters TP3 zum Schleifenfilter FS ist dann unterbrochen und das Schleifenfilter FS an den Ausgang des zusätzlichen Mischers angeschlossen.

## Patentansprüche

1. Optischer Homodynempfänger mit einem eingangsseitigen 90°-Hybrid (H), dessen beide Ausgänge jeweils über Tiefpaßfilter (TP1, TP2) und Verstärker (V1, V2) mit den beiden Eingängen eines Multiplizierers (BM) bzw. Mischers verbunden sind und der Ausgang des Multiplizierers (BM) über einen Schleifenfilter (FS) mit dem Steuereingang eines lokalen Lasers (LL) verbunden ist, bei dem ein erster Eingangsanschluß des 90°-Hybrids (H) optisch mit einem Signaleingang (DE) und ein zweiter Eingangsanschluß optisch mit einem Ausgangsanschluß (LE) des lokalen Lasers (LL) verbunden ist,
**dadurch gekennzeichnet,**
daß für den Empfang frequenzsprungmodulierter Signale in die Verbindung zwischen einem Ausgangsanschluß des 90°-Hybrids (H) und dem Multiplizierer (BM) ein erstes Verzögerungsglied (TG) eingefüg ist, daß der Ausgang des Multiplizierers (BM) über ein drittes Tiefpaßfilter (TP3) mit dem Signalausgang (DQ) des optischen Homodynempfängers verbunden ist, daß dem Eingang des ersten Verzögerungsgliedes (TG) der Eingang eines zweiten Verzögerungsgliedes (TGS) parallelgeschaltet ist, dessen Ausgang mit dem einen Eingang eines zweiten Mischers bzw. Multiplizierers (BMS) verbunden ist, dessen anderer Eingang mit demjenigen Eingang des ersten Mischers bzw. Multiplizierers (BM) verbunden ist, der nicht an den Ausgang des ersten Verzögerungsgliedes (TG) angeschlossen ist, daß die Verbindung vom Ausgang des dritten Tiefpaßfilters (TP3) zum Eingang des Schleifenfilters (FS) aufgetrennt und dieser Eingang mit dem Ausgang des zweiten Mischers bzw. Multiplizierers (BMS) verbunden ist.

2. Optischer Homodynempfänger nach Patentanspruch 1,
**dadurch gekennzeichnet,**
daß das erste Verzögerungsglied (TG) mit einer so kleinen Zeitverzögerung gewählt ist, daß die Amplitude des vorangehenden Bits des durchlaufenden Signals zum Abtastzeitpunkt des folgenden Bits vernachlässigbar klein ist.

3. Optischer Homodynempfänger nach Patentansprüchen 1 oder 2,
**dadurch gekennzeichnet,**
daß das erste Verzögerungsglied (TG) mit einer Zeitverzögerung entsprechend der Hälfte der Periode des bei der Erzeugung des Übertragungssignals sendeseitig verwendeten Frequenzhub gewählt ist.

4. Optischer Homodynempfänger nach Patentanspruch 1,
**dadurch gekennzeichnet,**
daß als Multiplizierer (BM) ein handelsüblicher Balancemischer vorgesehen ist.

5. Optischer Homodynempfänger nach Patentanspruch 1,
**dadurch gekennzeichnet,**
daß die Verzögerungszeit des zweiten Verzögerungsgliedes (TGS) maximal der halben Verzögerungszeit des ersten Verzögerungsgliedes (TG) entspricht.

## Claims

1. Optical homodyne receiver comprising a 90° hybrid junction (H) at the input end, the two outputs of which are in each case connected via low-pass filters (TP1, TP2) and amplifiers (V1, V2) to the two inputs of a multiplier (BM) or mixer and the output of the multiplier (BM) is connected via a loop filter (FS) to the control input of a local laser (LL), a first input terminal of the 90° hybrid junction (H) being optically connected to a signal input (DE) and a second input terminal being optically connected to an output terminal (LE) of the local laser (LL), characterised in that, for the reception of frequency-shift-keying modulated signals, a first delay section (TG) is inserted into the connection between an output terminal of the 90° hybrid junction (H) and the multiplier (BM), in that the output of the multiplier (BM) is connected to the signal output (DQ) of the optical homodyne receiver via a third low-pass filter (TP3) in that the input of the first delay section (TG) is connected in parallel with the input of a second delay section (TGS), the output of which is connected to one input of a second mixer or multiplier (BMS), the other input of which is connected to the input of the first mixer or multiplier (BM) which is not connected to the output of the first delay section (TG), in that the connection from the output of the third low-pass filter (TP3) to the input of the loop filter (FS) is separated and this input is connected to the output of the second mixer or multiplier (BMS).

2. Optical homodyne receiver according to Claim 1, characterised in that the first delay section (TG) is selected to have a time delay which is so small that the amplitude of the preceding bit of the passing signal is negligibly small at the sampling time of the following bit.

3. Optical homodyne receiver according to Claims 1 or 2, characterised in that the first delay section (TG) is selected to have a time delay corresponding to one half of the period of the frequency deviation used at the transmitting end for the generation of the transmission signal.

4. Optical homodyne receiver according to Claim 1, characterised in that a commercially available balanced mixer is provided as multiplier (BM).

5. Optical homodyne receiver according to Claim 1, characterised in that the maximum delay time of the second delay section (TGS) corresponds to half the delay time of the first delay section (TG).

## Revendications

1. Récepteur optique homodyne comportant un circuit hybride (H) à 90°, qui est situé du côté entrée et dont les deux sorties sont raccordées respectivement par l'intermédiaire de filtres passe-bas (TP1,TP2) et d'amplificateurs (V1,V2) aux deux entrées d'un multiplicateur (BM) ou mélangeur, la sortie du multiplicateur (BM) étant reliée par l'intermédiaire d'un filtre (FS) de boucle à l'entrée de commande d'un laser local (LL), et dans lequel une première borne d'entrée du coupleur (H) hybride à 90° est reliée optiquement à une entrée (DE) de signaux et une deuxième borne d'entrée est reliée optiquement à une borne (LE) de sortie du laser local (LL), caractérisé en ce que, pour la réception de signaux modulés par saut de fréquence, un premier circuit (TG) de retardement est inséré dans la liaison entre une borne de sortie du coupleur hybride (H) à 90° et le multiplicateur (BM), la sortie du multiplicateur (BM) est reliée par l'intermédiaire d'un troisième filtre passe-bas (TP3) à la sortie (DQ) de signaux du récepteur optique homodyne, il est branché en parallèle à l'entrée du premier circuit (TG) de retardement, l'entrée d'un second circuit (TGS) de retardement, dont la sortie est reliée à l'une des entrées d'un deuxième mélangeur ou multiplicateur (BMS), dont l'autre entrée est reliée à celle des entrées du premier mélangeur ou multiplicateur (BM), qui n'est pas connectée à la sortie du premier circuit (TG) de retardement, la liaison de la sortie du troisième filtre passe-bas (TP3) à l'entrée du filtre (FS) de boucle est interrompue et cette entrée est reliée à la sortie du deuxième mélangeur ou multiplicateur (BMS).

2. Récepteur optique homodyne suivant la revendication 1 caractérisé en ce que l'on choisit pour le premier circuit (TG) de retardement un retard temporel si petit, que l'amplitude du bit précédent du signal transmis est petite au point d'être négligeable à l'instant d'échantillonnage du bit suivant.

3. Récepteur optique homodyne suivant la revendication 1 ou 2 caractérisé par le fait que l'on choisit pour le premier circuit (TG) de retardement un retard temporel correspondant à la moitié de la période de l'excursion de fréquence utilisée côté émission lors de la production du signal de transmission.

4. Récepteur optique homodyne suivant la revendication 1 caractérisé par le fait qu'il est prévu comme multiplicateur (BM) un mélangeur équilibré usuel dans le commerce.

5. Récepteur optique homodyne suivant la revendication 1 caractérisé en ce que le temps de retard du second circuit (TGS) de retardement correspond au maximum à la moitié du temps de retard du premier circuit (TG) de retardement.
